# EUROPEAN PATENT SPECIFICATION

(11) **EP 3 322 498 B1**
(45) Date of publication and mention of the grant of the patent: **27.03.2019**
(21) Application number: 16778867.8
(22) Date of filing: 14.07.2016
(51) Int. Cl.: B01D 21/00, B01D 35/18, B01D 36/04, B01D 21/06, B01D 21/24, B01D 29/03, B01D 29/05, B01D 29/64, B01D 29/84

(54) **DEVICE AND METHOD FOR SEPARATING THE SOLID FRACTION FROM THE LIQUID FRACTION OF A SLURRY**
VORRICHTUNG UND VERFAHREN ZUR TRENNUNG DES FESTSTOFFANTEILS VOM FLÜSSIGEN ANTEIL EINER SCHLÄMME
DISPOSITIF ET PROCÉDÉ POUR SÉPARER LA FRACTION SOLIDE DE LA FRACTION LIQUIDE D'UNE BOUE

(30) Priority: 15.07.2015 IT UB20152211
(43) Date of publication of application: 23.05.2018
(73) Proprietor: Delta Costruzioni Meccaniche S.r.l., 20826 Misinto (MB) (IT)
(72) Inventor: MASETTO, Gian, Claudio, 20900 Monza (MB) (IT)
(74) Representative: Premru, Rok
(86) International application number: PCT/IB2016/001001
(87) International publication number: WO 2017/009709

(56) References cited:
- WO-A1-2007/096910
- CN-U- 201 644 093
- US-A- 1 139 825
- US-A- 4 376 705
- US-A- 4 592 835

## Description

The present disclosure relates to a device and a method for separating the solid fraction from the liquid fraction of a slurry.

As used herein, the term "slurry" designates a suspension of solid particles in the form of an (amorphous) or microcrystalline precipitate in a liquid phase.

In the production processes conducted in chemical, pharmaceutical and food processing industries, intermediate or final products may be found to be suspended in the liquid reaction or crystallization medium, also known as slurry.

Slurries comprise a solid fraction (composed of particles of different sizes having a crystalline or non-crystalline structure, often aggregated), and a liquid fraction.

One of the technologies that have been used for separation of the solid phase from the liquid phase is filtration and particularly pressure filtration as disclosed in WO2007096910, US4376705, WO2007096910 or CN201644093U.

With this technology, slurries are introduced into tanks equipped with filter media laid on the bottom of the tanks.

As a result of gravity, and especially by the application of pressure, the liquid phase that passes through the filter may be separated from the solid phase that remains in the tank by being retained on the filter (thereby forming the so-called "filter cake" or deposit).

Among pressure filtration apparatus for filtering slurries, the most significant ones are filter driers, which first separate the liquid fraction from the solid fraction and then dry the solid fraction.

One drawback that is found during filtration is that the flow of the liquid being filtered considerably decreases over time, as the solid product progressively builds up on the filter media, which will increase the duration of the filtering process.

This problem is particularly felt in those industrial processes in which the particles to be retained are very small and highly selective filtering is required.

Furthermore, the solid product retained by the filter media includes soluble impurities, or possibly very fine-sized insoluble impurities, that have to be removed by later washing.

Therefore, liquid products must be introduced into the tank again, to wash the solid product, push it back in suspension and filter it again.

This step may be repeated multiple times until a product purified to the target degree is obtained.

It will be understood that the total time required for adequately separating the solid from the liquid will be long, sometimes tens of hours.

As a result, the time required to obtain an adequately purified solid product from the slurry may be a problematic issue in industrial processes, due to its duration.

The object of this invention is to obviate at least some of prior art problems and particularly the one as set forth hereinbefore.

Particularly, the object of the invention is to provide a solution for reducing the time required by the process of separation of the solid phase from the liquid phase, thereby improving the throughput of the production line.

A possible embodiment of the invention will be now described with reference to the accompanying drawings in which:
- Figure 1 is a schematic view of a device suitable for pressure operation, which is used to separate the solid fraction of a slurry;
- Figure 2 schematically shows the device of Figure 1 during a first step of the slurry treatment process;
- Figure 3 schematically shows the device of Figure 1 during a second step of the slurry treatment process;
- Figure 4 schematically shows the device of Figure 1 during a third step of the slurry treatment process;
- Figure 5 schematically shows the device of Figure 1 during a fourth step of the slurry treatment process;
- Figure 6 schematically shows an embodiment that can provided as an alternative to the device of Figure 1;
- Figure 7 shows a liquid shut-off device that may be used with the device of Figure 1;
- Figure 8 shows two graduated glass containers to be used in tests for monitoring the slurry sedimentation process and the formation of the clarified phase;
- Figure 9 shows two diagrams which illustrate the levels of the separation interfaces between the clarified layer and the thickened slurry as a function of time, as determined during the tests conducted with the containers of Figure 6.

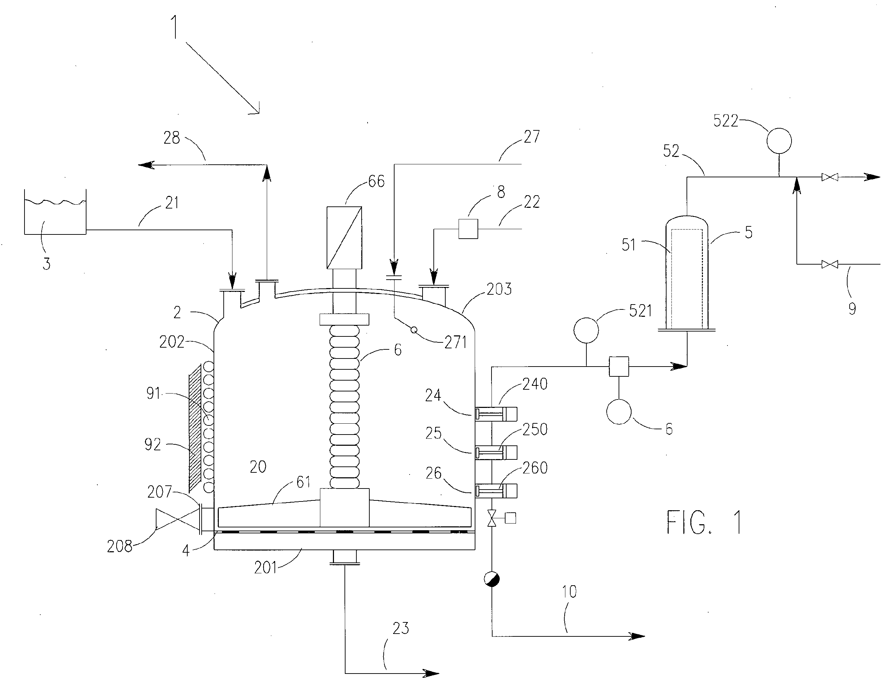

Referring to the accompanying drawings, Figure 1 generally shows a device for separating the solid fraction of a slurry from the liquid fraction.

The device 1 comprises a container 2, which defines a chamber 20 for containing a slurry 3 to be treated.

The chamber 20 is delimited by a bottom 201, a side wall 202 and a top 203.

In the illustrated embodiment, the container 2 has a substantially and/or generally cylindrical side wall 202 and a substantially and/or generally dome- or mushroom-shaped top 203.

The container 2 is made of metal, e.g. stainless steel and its dimensions change as needed.

The container 2 is suitable for operation both at pressures above the atmospheric pressure and at pressures below the atmospheric pressure.

A filter medium 4 located on the bottom 201 of the chamber 20 is provided to retain the solid particles contained in the slurry 3.

In the illustrated embodiment, the filter medium 4 defines a substantially and/or generally flat surface π more particularly a circular flat filter surface, situated at the bottom 201 of the chamber 20.

The filter medium 4 may be formed with filter materials having different selectivities, as needed.

In a possible embodiment, the filter medium 4 is composed of a plurality of superimposed wire gauzes, with a strictly monotonically varying filtration degree

Here, the gauze with the highest filtration degree faces the inner side of the chamber 20 (i.e. at the top).

The bottom 201 of the container 2 may be removable (not shown); this can allow access to the container 20 for maintenance.

A conduit 21 is provided for the inflow of slurry 3 into the chamber 20, and opens into the upper portion of the chamber 20.

A further conduit 23 is also provided for the outflow of the liquid fraction that passes through the filter medium 4.

In the illustrated embodiment, the upper portion of the chamber 20 is in communication with a conduit 22 for the inflow of a gas (e.g. nitrogen), which is designed to increase pressure in the chamber 20 and thereby accelerate the filtration process.

A primary filtration process (or first filtration stage) is carried out in the chamber 20, i.e. a filtration process performed on the original slurry 3, leading to the separation of the solid slurry (retained by the filter medium 4) from the liquid fraction (passing through the filter medium 4).

Usually, the solid fraction that is directly obtained from slurry filtration cannot be used as is in the later steps of the production process, as it is not sufficiently free of the original wetting liquid and of the (liquid and solid) impurities contained therein.

In order to increase the degree of purity of the solid fraction, the solid phase resulting from the first filtration stage has to be put back in suspension, by introducing a suitable washing liquid into the container 20 for a further filtration stage (known as "secondary filtration").

The solid fraction washing process and its later filtration may be possibly repeated multiple times, until the required degree of purity is obtained.

The upper portion of the chamber 20 is in communication with a conduit 27 for the inflow of washing liquid, for the steps of washing and further filtration of the solid fraction that has built up on the filter medium 4.

Preferably, the conduit 27 supplies liquid to one or more nozzles 271 for improved distribution of the washing liquid on the filter cake.

A shaft 6 is placed in the chamber 20, and supports a plurality of blades 61, 61.

The shaft 6 is designed to rotate about a substantially and/or generally vertical axis X, which is also substantially and/or generally orthogonal to the plane π defined by the surface of the filter medium 4.

The shaft 6 may be driven at an adjustable angular velocity.

The shaft 6 is adapted to rotate in both directions about the axis of rotation X.

The shaft 6 can be axially translated to adjust the distance of the bladed 61, 61 from the filter medium 4.

In the illustrated embodiment, the shaft 6 extends through the dome 203 and is driven by motor means 66 (e.g. a hydraulic motor) installed outside the container 2.

The device 1 further comprises means for removing the solid fraction that has built up in the container 20 on the filter medium 4 at the end of the process for separation of the solid fraction from the liquid fraction of the slurry.

For this purpose, a lateral access port 207 may be provided on the lower portion of the side wall 202, at about the same level as the filter plat 4, and is opened and closed under the control of a valve 208.

Here, the removal of the solid fraction is obtained by driving the valve 208 open and rotating the blades 61, 61.

Seal means, not shown, are further provided, to seal the chamber 20 from the external environment, such that operation at pressures above or below the atmospheric pressure is allowed inside the chamber 20.

The blades 61, 61 are so conformed as to be able to scrape the filter cake (when the shaft 6 rotates in a first direction of rotation) and are so conformed as to be able to press the filter cake (when the shaft 6 rotates in the direction opposite to the first direction of rotation).

For this purpose, each blade 61 may have a blade edge that is inclined to the plane π defined by the filter blade 4, such that it can carry out two different tasks by simply reversing the direction of rotation of the shaft 6.

The blades 61, 61 are further designed, when immersed in a liquid or a slurry, to generate an axial and/or radial flow, thereby mixing the contents of the chamber 20.

The conformation of the blades 61, 61 may be of traditional type, and will not be further described herein.

At about the end of the pressure filtration step, the blades 61, 61 are carried close to the filter cake (i.e. the solid fraction that has built up on the filter medium 4) for the latter to be further compacted, thereby preventing the formation of cracks that would cause leakage of the gas used to hold the chamber 20 under pressure.

During the washing step (that precedes the secondary filtration), the shaft 6 is rotated in the opposite direction to remove the filter cake from the filter medium 4, stir the contents of the chamber 20 and put the solid fraction back in suspension.

Usually, as soon as a solid fraction of sufficient purity is obtained, it has to be dried to remove any trace of liquid.

In the embodiment of Figure 1, the device 1 is further able to act as a drier.

For this purpose, a heat exchanger 91 is provided, to heat up the interior of the chamber 20.

In the illustrated embodiment, the heat exchanger 91 may be a heating chamber, supplied with hot water, steam or diathermic oil, which at least partially encircles the side wall 202 of the container 2.

An insulating shell 92, or an outer enclosure may be further provided, to cover the heat exchanger 91 and the wall 202 of the container 2.

If the solid fraction contains thermolabile molecules, a low heating temperature must be maintained (e.g. of the order of 30-50°C).

For this purpose, the top of the chamber 20 is also in communication with a gas intake conduit 28 for reducing pressure in the chamber 20 to values below the atmospheric pressure, thereby decreasing the temperature required for the solid fraction to be dried.

Vacuum is created, for instance, by means of a vacuum pump (not shown) preferably with a refrigerated condenser (not shown) upstream therefrom.

Means 24, 240, 25, 250, 26, 260; 29, 290 are further provided for withdrawal from the chamber 20 at an adjustable height.

These means are used to withdraw at least some of the clarified liquid 3 resulting from gravity sedimentation of the slurry.

The ability of adjusting the level at which withdrawal occurs allows removal of the clarified liquid being formed while preventing the thickened slurry from being withdrawn with the clarified liquid.

The withdrawal of the clarified liquid, in combination with the filtration process through the plate 4, allows a significant reduction of the overall time required for completion of the process of separation of the solid fraction from the liquid fraction of the slurry contained in the chamber 20.

In the embodiment of Figure 1, the means for withdrawing clarified liquid from the container 20 at an adjustable level comprise a plurality n of outflow ports 24, 25, 26 for the clarified liquid, which are formed in the side wall 202 of the container 20.

The outflow ports 24, 25 26 (in the illustrated embodiment three outflow ports) may have a substantially and/or generally frustoconical shape, and are placed at different heights from the bottom 201 of the container 20.

An shut-off valve (or on/off valve) 240, 250, 260 is associated with each outflow port 24, 25, 26.

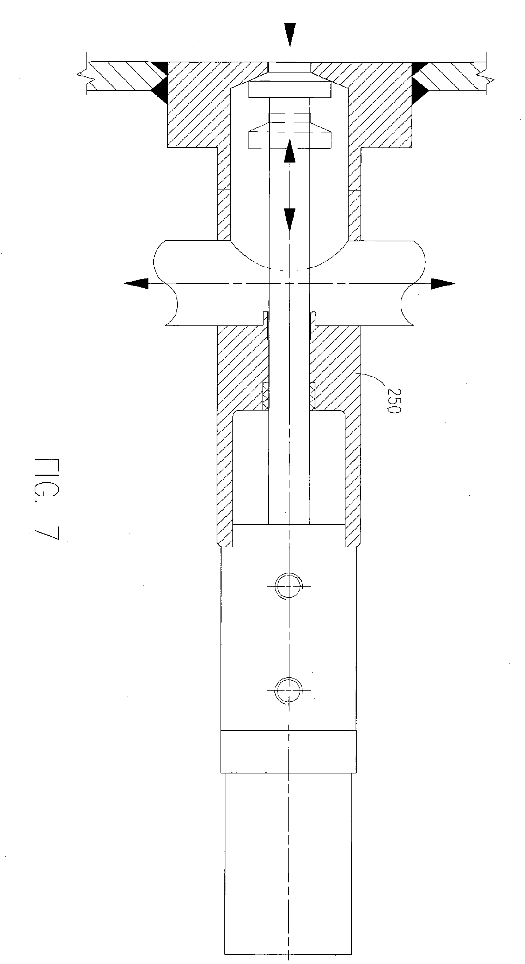

In the example of Figure 7, the valves 240, 250, 260 have an axially driven shut-off member.

The on/off valves 240, 250, 260, which may be for instance pneumatically or electrically operated valves, can be selectively operated to change the level at which withdrawal occurs.

The number of outflow ports 24, 25, 26 for the clarified liquid and their heights may change according to the nature of the slurry and the size of the container 2.

The outflow ports 24, 25, 26 for the clarified liquid may be formed directly in the side wall 202 of the container 20 or in a plate welded to the wall 202.

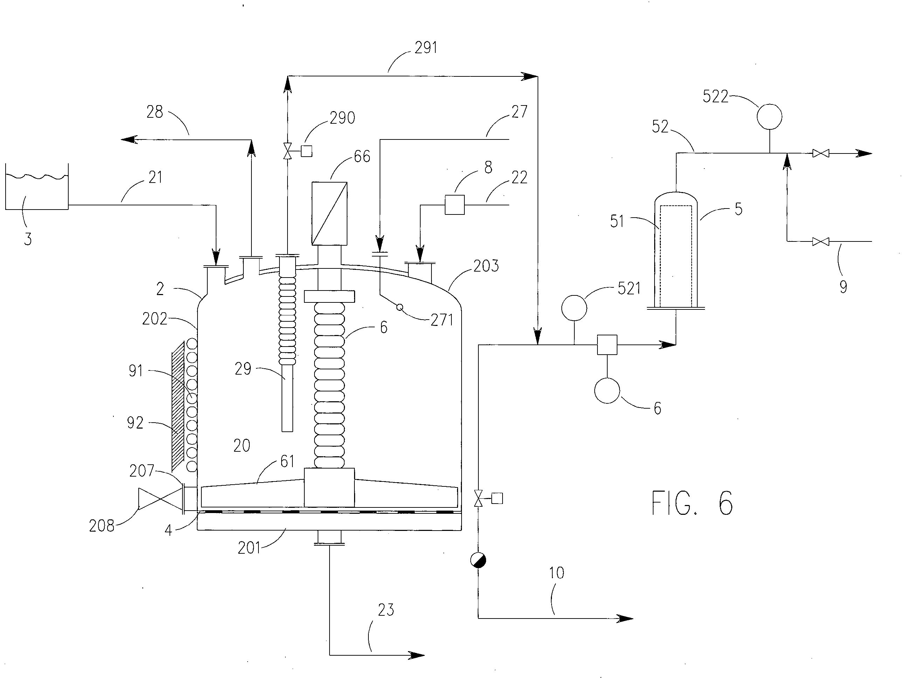

In an alternative embodiment, as schematically shown in Figure 6, the clarified liquid is withdrawn via a tube 29 introduced into the chamber 20, which has such length as to avoid any interference with the shaft 6 and is axially adjustable to change the draft.

The tube 29 is connected to a line 291 via a valve 290.

In the illustrated embodiment, the device 1 also comprises a flow meter 8, installed in the line 22 for supplying the gas for pressurizing the container 2.

The flow meter 8 indicates any changes in the flow rate of the pressurizing gas, occurring when the level of the contents in the chamber 20 falls to the level of withdrawal of the clarified liquid.

Any sudden increase in the gas flow detected by the flow meter 8 indicates that the clarified liquid has fallen below the level of withdrawal and the system instantaneously closes the lateral port 24, 25 or 26 or the tube 29.

The clarified liquid 3 removed from the chamber 20 is substantially free of large particles, but it may contain smaller particles, that do not easily settle down.

Once the clarified liquid has been withdrawn from the chamber 20 it can be sent to a second filtration device 5 (or auxiliary filtration device) via a conduit 50.

The second filtration device 5 shall have a higher selective capacity than the first filter medium 4.

In a possible embodiment, the second filtration device 5 comprises a cartridge filter medium 51 (possibly made of sintered metal meshes) whose selectivity is 2 µm, 5 µm or 10 µm.

The filter medium 51 of the second filtration device 8 operates on a clarified liquid, whereby it requires a smaller filtering surface than that required by the filter medium 4 of the first filtration device 1.

In the illustrated embodiment, the pressure imparted by the gas in the dome of the container 20 provides energy to push the clarified liquid toward the auxiliary filtration device 5 which is preferably at a height above the height of withdrawal of the clarified liquid.

Due to the pressure drop in the clarified liquid that is sent to the secondary filtration device 5 (which is installed above the level of withdrawal from the container 2) the gases dissolved in the liquid are released.

In the less preferred case in which the first filtration device 2 does not have a pressure-assisted operation, the second filtration device 5 must be installed below the level of withdrawal of the clarified liquid, or the clarified liquid is transferred by means of a pump (not shown).

The clarified fraction withdrawn from the container 20 passes through the second filtration device 5 and is drained via a drain conduit 52.

The second filtration device 5 may have devices associated therewith for checking the quality of the clarified liquid, i.e. for determining whether the clarified liquid that has been withdrawn from the container 2 is sufficiently free of suspended solid particles.

For example, a pair of pressure gages 521, 522 may be placed respectively upstream and downstream from the auxiliary filter 5.

A significant difference between the two pressure values detected, provides an indication that the auxiliary filter 5 has become clogged and that there is an excess of solid particles suspended in the clarified liquid withdrawn from the container 20.

Instead of and/or in addition to the pair of gages 521, 522, a turbidimeter 6 may be provided (in the same line, upstream from the auxiliary filter 5), which is appropriately calibrated to detect abnormal turbidity threshold values indicative of an excess of particles suspended in the clarified liquid that is sent to the auxiliary filter 5.

This will provide useful information for possibly correcting the operation parameters of the above described device.

Any solid deposits retained by the filter medium 51 of the auxiliary filter 5 may (if deemed convenient) be reintroduced into the main filter 2 by counter-current washing of the auxiliary filter 5.

This step is carried out using a small amount of previously filtered and collected clarified liquid, by operating at a pressure above the pressure of the gas in the container 20, created by the action of a pump or a compressed gas (not shown), and in the opposite direction through the conduit 52.

In the illustrated embodiment, a conduit 9 is provided for the inflow of a fluid (e.g. steam) for cleaning and sterilizing the secondary filter 5, the valves 240, 250, 260 and their respective connection conduits 50 and 52.

The steam introduced through the conduit 9 passes through the hydraulic circuit for the clarified liquid and flows out of a drain conduit 10.

If needed, the conduit 9 may be used to introduce liquids adapted to remove any solid residues that are not compatible with the later use of the filtration device 1.

It shall be noted that the above described device may be easily provided in combination with existing filtration apparatus (such as the so-called "Nutsche filters") with inexpensive construction changes.

The device 1 may be manually or automatically controlled, e.g. using a dedicated PLC.

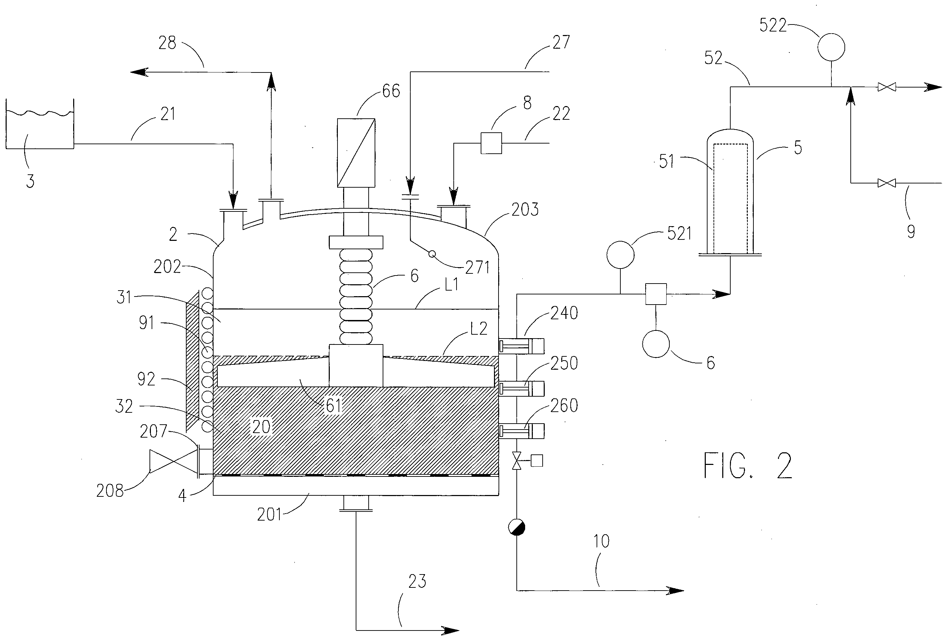

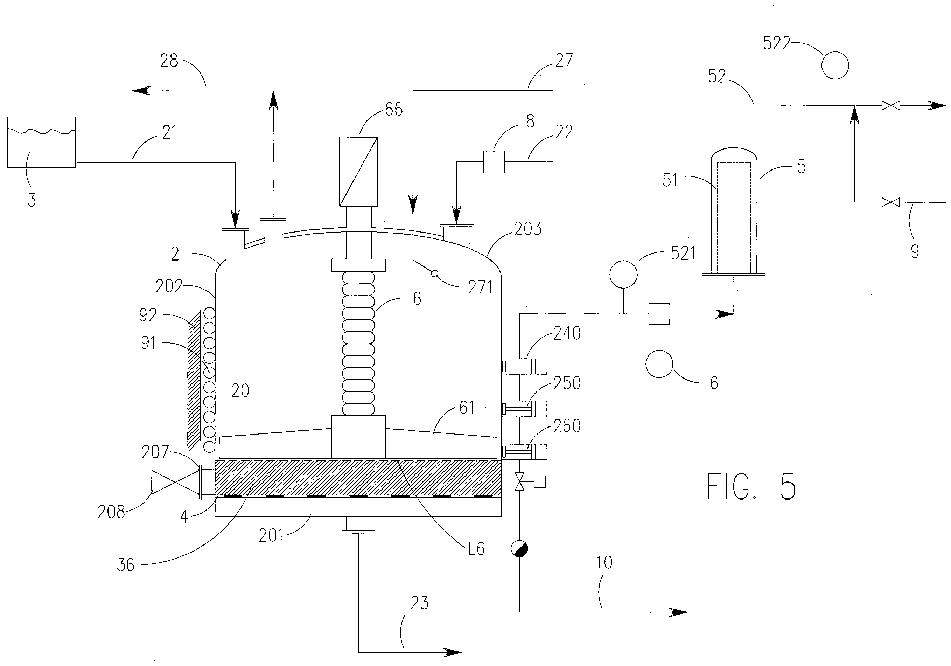

The operation of the device 1 is schematically shown in Figures 2-5.

As shown in Figure 2, the slurry 3 is introduced into the container 20 through the conduit 21 for the inflow of slurry 3 until an initial level L1 is reached.

The slurry 3 comprises a solid fraction (composed of particles of different sizes having a crystalline or non-crystalline structure, often aggregated), and a liquid fraction.

The specific weight of the solid particles may be greater (as is most frequent) or smaller than that of the liquid in which they are contained.

Figures 2-5 show the operation of the device 1 if the solid particles have a greater density than the liquid in which they are suspended.

The slurry 3 introduced in the container 20 is filtered (in the illustrated example pressure filtered) by causing the liquid part to pass through the filter medium 4 while the solid residue (or solid fraction) progressively builds up on the filter medium 4 (thereby creating the so-called "filter cake" or deposit).

The filtered liquid flows out of the outflow conduit 23.

During the filtration process, the slurry introduced into the container 20 undergoes a gravity sedimentation process.

As a result, a clarified liquid phase 31 is formed in the container 20 (in the illustrated example the upper portion of the slurry above level L2), distinct from and above a thickened slurry phase 32 (in the illustrate example the lower portion below level L2).

When the interface between the clarified liquid 31 and the thickened slurry 32 (referenced L2 in Figure 2) falls below the level of the first port 24, the clarified liquid 31 is caused to at least partially flow out of the first outflow port 24 and is sent to the second filtration device 5.

For this purpose the first uppermost valve 240 is opened, and the other valves 250, 260 remain closed.

After the first withdrawal of clarified liquid 31, the total contents in the container 20 fall to level L3, while filtration continues from the bottom and an additional clarified liquid phase 33 is formed above a thickened slurry phase 34.

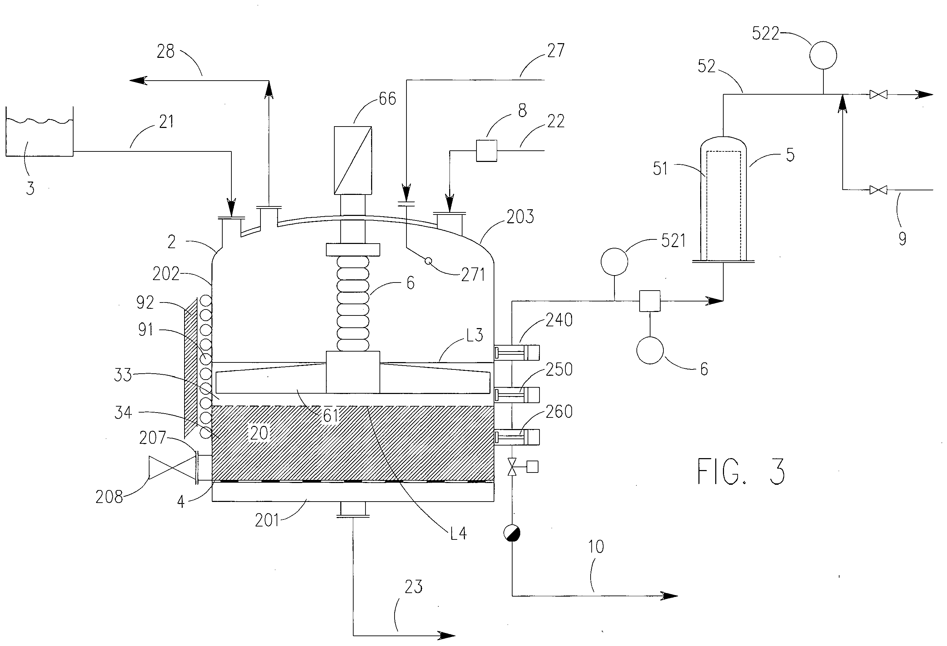

Then, when the interface between the clarified liquid 33 and the thickened slurry 34 (referenced L4 in Figure 3) falls below the level of the second port 25, the clarified liquid 33 is caused to at least partially flow out of the second outflow port 25 and is sent to the second filtration device 5.

After the second withdrawal of clarified liquid 33, the total contents in the container 20 fall to level L5, while filtration from the bottom, liquid clarification and slurry thickening continue.

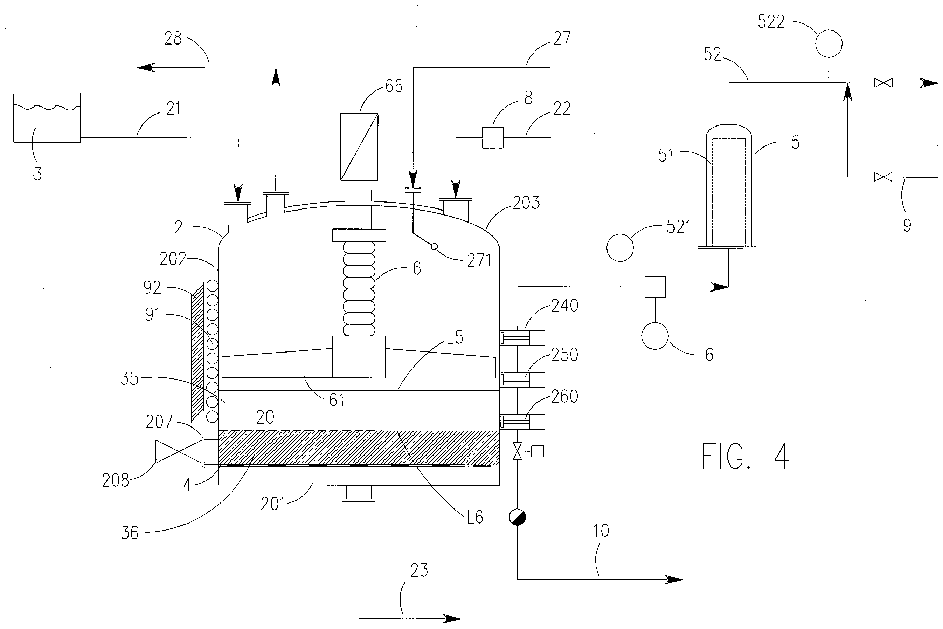

Finally, when the interface between the clarified liquid 35 and the thickened slurry 36 (referenced L6 in Figure 4) falls below the level of the third port 26, the last withdrawal of clarified liquid 35 is performed, and the liquid is sent to the auxiliary filtration device 5.

When the level of the total contents in the chamber 20 fall below the height of the lowermost lateral port (in the illustrated example the port 26), the primary filtration process ends.

At the end of the primary filtration, a liquid for washing the wet product collected on the filter medium 4 may be introduced through the conduit 27, so that the solid phase may be put back in suspension and the container 20 may be filled to a desired level (usually below the level of the original slurry).

The solid residue compacted on the filter medium 4 is put back in suspension by suitably rotating the blades 61, 61.

As described above concerning primary filtration, filtration through the filter medium 4 and gravity sedimentation are repeated, and provide a new clarified phase, which is withdrawn at various levels in the same manner as described for primary filtration, and is sent to the auxiliary filter 5.

The washing and secondary filtration cycle may be repeated multiple times until an adequately washed solid residue is obtained, which has an acceptable level of (liquid and solid) impurities according to the applicable product quality standards.

The solid residue that has built up on the filter medium 4 may then undergo a drying process.

The (dry or wet) solid product may be removed from the chamber 20 through the lateral port 207, with the valve 208 open, by actuating the blades 61, 61.

The above described device and method afford an overall reduction of process times, leading to important benefits in terms of industrial production costs.

The flow rate at which the clarified liquid is withdrawn during filtration of the slurry 3 may be of a higher order of magnitude than that at which the filtrate flows out of the filter medium 4 on the bottom of the container 2.

In other words, the overall amount of clarified liquid removed from the container 2 may be considerably greater than the amount that flows out of the filter medium 4.

As a result, the overall duration of the process for separation of the solid fraction from the liquid fraction of the slurry is dramatically reduced.

It shall be noted that, due to the removal of the clarified liquid, the filter medium 4 will maintain a higher filtration rate.

This arrangement prevents the smaller particles in the clarified liquid from clogging the pores of the solid product (the "cake" or deposit) that has built up on the plate 4.

The smaller solid particles in the clarified liquid may be made up of compounds with properties differing from those of the product to be filtered, which are considered as undesired impurities.

Therefore, it will be appreciated that a further advantage afforded by the removal of the clarified liquid is that the filtered solid product will contain a smaller amount of such impurities.

As a result, the number of successive secondary filtration cycles may be reduced.

The quality of the filtered solid product obtained from filtration of the slurry 3 according to the above described process cannot even logically be lower than that obtained with the prior art.

The above described device is able to separate the solid fraction and the liquid fraction of a slurry and comply the requirements of the validation protocols prescribed for operation of apparatus, when used for pharmaceutical or food production.

Proper operation of the above described device 1 requires knowledge of the behavior of the slurry and particularly of the clarification process over time.

In other words, the position of the interface between the clarified liquid and the thickened slurry over time must be known.

Theoretical calculations (based on information such as the nature and composition of the solid fraction and the liquid fraction) cannot predict to a sufficiently accurate extent the slurry clarification process.

A possible solution (not shown) may consist in using optical devices to monitor the clarification process in the tank 2, to determine when selective withdrawal of the clarified liquid from the lateral ports 24. 25, 26 of the tank 2 may be started and ended.

While the use of optical devices for monitoring the clarification process is technically feasible, it involves a non-negligible increase of the overall costs for manufacturing the above described device.

The inventor realized that an empirical, but reliable method may be used to predict the height of the interface between the clarified liquid and the thickened slurry over time.

The industrial production processes in chemistry, particularly in pharmaceutical chemistry, as well as in food processing, are standardized processes, which must usually comply with stringent protocols and verification procedures, ensuring that slurries from different batches of the same product exhibit no significant differences in their chemico-physical properties over time.

Relying on this condition, off-line experimental data may be acquired to predict the position of the interface between the clarified liquid and the thickened slurry in the chamber 20 of the container over time.

The clarified fraction is withdrawn through the ports formed in the side wall 202 of the first filter 2 by a plurality of successive discrete withdrawals, from the uppermost lateral port to the lowermost lateral port.

The duration of each withdrawal and the time interval between withdrawals are established as a function of the experimental data acquired from slurry analysis.

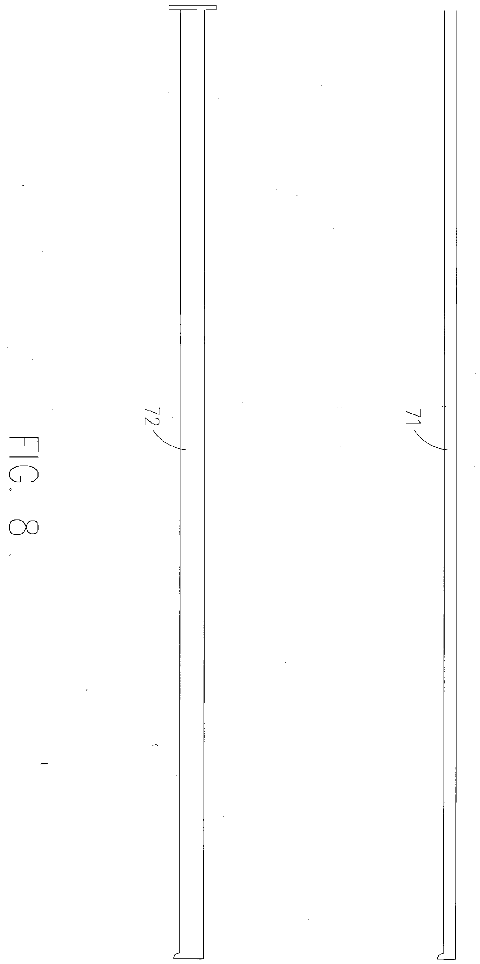

The experimental data may be acquired, for instance, using at least one clear cylindrical vessel and preferably at least two clear cylindrical vessels, e.g. two glass vessels 71, 72 having a height equal to or greater than that reached by the slurry in the container 20, and having different diameters, e.g. 25 mm and 50 mm (see Figure 8).

A slurry representative of the process, i.e. a sample of the solid product suspended in reaction and/or crystallization mother liquors, in the real proportions of the production process is simultaneously poured into both clear vessels 71, 72, to reach the same height as in the industrial apparatus (the container 2) in both vessels, by pouring the whole batch.

The sample may be withdrawn from the same industrial production line, if it is active, or may be obtained from pilot apparatus as a small amount is required, of the order of 0.5 - 6 liters.

The solid particles start to settle (or float) thereby allowing separation of the clarified liquid from the thickened slurry.

The clarification process may be thus monitored, as it occurs in the upper or lower portions of the vessels 71, 72, until it ends.

In practice, the level of the interface between the clarified liquid and the thickened slurry is noted, as shown in Figure 7.

Such interface corresponds to the lower level of the clarified liquid (if the density of the solid phase is higher than the density of the liquid phase) or the upper level of the clarified liquid (if the density of the solid phase is lower than the density of the liquid phase).

The clarification process may be observed by the naked eye, by appropriately illuminating the two vessels 71, 72.

Suitable optical instruments may be also used, such as turbidimeters or nephelometers, for more accurate assessment of the nature and amount of the smallest suspended particles, which remain in the clarified liquid.

The above described procedure may be repeated (on multiple slurry samples representative of the same production cycle), to check whether the charts so obtained are substantially superimposable.

Therefore, the charts will predict how the slurry clarification process will be carried out in the first filter.

In order to make sure that the clarified liquid does not contain significant amounts of solid fraction, samples of clarified liquid may be withdrawn from the clear vessels 71, 72, e.g. by siphoning using a cannula.

The clarified liquid so removed is filtered using a filter of appropriate selective capacity, e.g. a Buchner filter having a sintered steel filter medium of known selectivity (e.g. with a selectivity of 2 µm or 5 µm) and a known weight.

The filter medium will be later placed in a drier and then weighed again, and the difference from the initial weight will provide the amount of product that has been retained by the filter.

Once the above described information about the "primary" sedimentation process of the original slurry introduced in the apparatus has been obtained, similar measurements, observations and calculations are repeated in the same manner by simulating the washing steps of the industrial production processes, as well as the consequent "secondary" sedimentation processes.

For this purpose, the required amounts of washing liquid are poured into the cylindrical vessels containing the thickened solid that remains on the bottom, in proportion, and the product is put back in suspension by stirring.

A new analysis is conducted on product resettling and on the resulting formation of the clarified liquid, according to the above discussed criteria and methods.

The, all the operations that have been already carried out on the original slurry (observation, level measurement, time recording, calculation, withdrawal of fractions of the clarified liquid, filtration of the clarified liquid, drying and weighing of any solids retained by the filter, etc.) are repeated to achieve a detailed knowledge of the settling phenomenon in all the steps of the industrial process, i.e. primary filtration, washing steps and later secondary filtrations.

The temperature of the slurry contained in the cylindrical vessels 71, 72 is approximately the same as that of the process slurry introduced into the container 2.

Any significant temperature difference may lead to considerable variations in the viscosity of the liquid in which the solid particles are suspended, and hence to considerable variations in the settling rate (which increases with temperature).

For a better understanding of the advantages of the above described device and method, a slurry treatment example is disclosed hereinafter, according to both the prior art and the method suggested by the inventors.

The slurry in use is a suspension of a pharmaceutical product that is difficult to filter, which has to be separated by filtration of reaction mother liquors, also containing undesired by-products, and by drying of the wet product in the same process apparatus.

The volume of the slurry to be treated is about 6,000 liters, i.e. 400 liters solid product and 5,600 liters reaction mother liquors, the temperature is 10°C, the density of the solid is about 1.4 kg/dm³, and the density of the liquid in which the solid is suspended is slightly greater than 1,0 kg/dm³.

### Example of a filtration process according to the prior art

A traditional filter-drier is used, having a filtering surface of 4 m² and a porosity of 20 µm, a useful depth of 150 cm and a useful volume capacity of about 6 m³.

The slurry undergoes a primary filtration process and four successive secondary filtration processes (after cake washing).

The primary filtration and the subsequent secondary filtrations are carried out under pressure using nitrogen charged in the dome at 4 bar.

Once the primary filtration has been carried out, the filter cake on the bottom of the filter-drier (400 liters solid and 200 liters liquid) is resuspended by the use of a stirrer in 1,000 liters washing liquid (total volume 1,600 liters, height 40 cm).

The first secondary filtration is carried out still under pressure.

The liquid filtered from the bottom has a volume of about 1,000 liters.

Three additional secondary filtrations are carried out in the same manner.

The liquid filtered from the bottom and collected in the tank has an overall volume of about 9,400 liters, 5,400 liters collected during primary filtration, and 4,000 liters in total during the four secondary filtrations.

As a whole, the five filtrations take 34 hours.

The solid remaining on the filter medium is impregnated with about 200 liters of liquid, that will be removed in the later drying step, that will require 12 hours under vacuum.

Therefore, the filter-dryer will be operating for 46 hours as a whole with an additional step in which the dried solid is discharged, which will make a total of 48 hours.

### Example of a filtration process according to the method suggested by the inventors.

### a) First example of empirical slurry behavior detection

Before using the apparatus provided by the inventors, the slurry clarification process has to be investigated by experimental detection.

Two glass vessels are provided, whose inside diameters are 25 mm and 50 mm respectively.

The two vessels are filled to a height of 150 cm (the height that is reached in the industrial filter-drier) with representative samples of the slurry having volumes of 750 cm³ and 3.000 cm³ respectively.

Both samples have a temperature of 10°C and the amount of solid product contained therein is determined to be 70g and 280 g respectively.

Now, the process is monitored over time in the vessels, by illuminating them with a normal lamp.

The observations are carried out in an environment that is constantly maintained at the same temperature as the samples in use, i.e. 10°C.

At first the slurry is dark brown in the vessel with the greater diameter, and has a brighter color in the other.

After 15 minutes a whitish product deposits to the same height on the bottom of both vessels and a considerable, progressive clarification of the slurry appears above, and becomes more evident in the upper portion of the vessels.

The lower level of the clarified fraction after 15 minutes is in both vessels at 140 cm.

Solid particles are found to adhere to the walls, the color tone of the liquid tends to decrease, although the liquid column with the smaller diameter is always brighter.

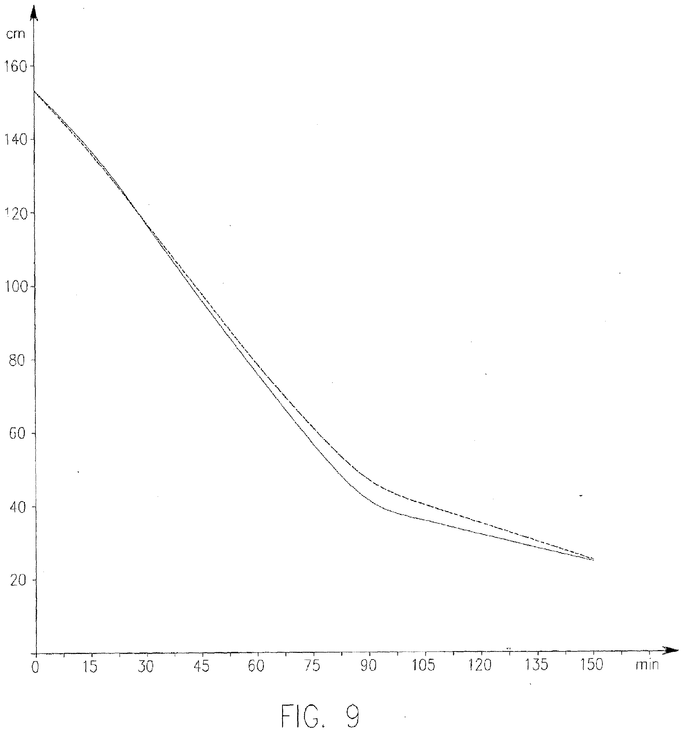

Observations are repeated at 15-minutes intervals and the data is recorded in a chart indicating the lowest level reached by the clarified fraction (Fig. 9).

In this example, the continuous line is related to the vessel 71 whose inside diameter is 25 mm and the broken line is related to the vessel 72 whose inside diameter is 50 mm.

An analysis of the reported observations and the recorded data indicates that the product settling process is substantially over after 150 minutes.

The final height of the compacted layer is 22.5 cm and the lower level of the clarified liquid is stably located at this level.

The above described test is repeated two more times using samples withdrawn in the next days from the same production line, and the curves of the charts obtained the first time are confirmed.

The process of lateral removal of the clarified liquid is experimentally simulated, with withdrawals at four different heights, e.g. 120 cm, 90 cm, 60 cm, 30 cm, and hence after 30 minutes, 50 minutes, 75 minutes, 105 minutes respectively.

The clarified liquid is withdrawn from the two cylindrical glass vessels by siphoning, using a cannula introduced from the top and accurately avoiding any solid withdrawal.

The two fractions withdrawn each time are separately filtered using a Buchner filter, having a sintered metal filter medium with a 5 µm selectivity on its bottom.

The total amounts of clarified liquid withdrawn from the two vessels are about 600 cm³ and 2400 cm³ respectively, corresponding to 80% the initial contents.

In the smaller vessel, after drying the total weight of the solid product contained in the clarified liquid, and remaining on the filter medium is about 45 mg, in the larger vessel it is about 180 mg.

The amount of product collected in both cases corresponds to about 360 g, based on the total volume of the clarified filter that will be withdrawn by the industrial filter.

Proportionally, the product loss in the industrial process would be 0.065%: it is a small amount that might be recovered by counter-current washing of the accessory filter provided by the method, once the solid retained by the filter is determined to be free of solid impurities.

The test continues with a first resuspension of the solid product that has remained on the bottom of the larger cylindrical container by pouring thereupon 500 cm³ of washing liquid and by stirring the container to resuspend the solid.

A level of 40 cm is reached in the vessel.

The slurry is allowed to settle and the clarified liquid is withdrawn at the height of 30 cm.

The above described operation is repeated three times and at the end the four fractions of clarified liquid are joined together and submitted to filtration using a Buchner filter with a filter medium, and with residual solid drying and weighing features.

The residual amount of solid is 63 mg, about 35% the amount of solid retained during primary filtration.

The washed and wet solid remaining on the bottom of the container is filtered, weighed and analyzed, and a loss of 820 mg is determined, about 0.3% based on the expected total weight of about 280 g, but with a product quality above its standard.

### a) Second example of empirical slurry behavior detection

Based on the above described experimental results and the observations concerning losses and quality achieved, an additional test is conducted, which consists in washing the residual wet solid resulting from the primary filtration step using all the volume of liquid that is designed to be used in the four washing and secondary filtration steps.

For this purpose, another representative sample of 3,000 cm³ is used, which is withdrawn from the same production line.

All phase separation observations that were conducted in the first test are successively repeated, and the withdrawal of clarified liquid fractions is performed in the same manner as described above.

There results a substantial equivalence with the above describes phenomena found, as well as with the data obtained from primary filtration, concerning sedimentation times (Figure 7) amount of liquid withdrawn, amount of residual solid on the filter medium.

The wet solid that remains on the bottom of the container after the last withdrawal of clarified liquid, which reaches the same level as the previous test (22.5 cm), is resuspended in a volume of 2,000 cm³, added together and not through four successive fractions of 500 cm³, thereby reaching a level of 122.5 cm.

Once the contents are stirred to obtain a homogeneous slurry, the sequence of clarified liquid withdrawals is repeated in the above described manner.

Withdrawals end after 185 minutes, and leave a layer of wet solid product (22.5 cm) on the bottom and a layer of clarified liquid (2.5 cm) thereon.

The clarified liquid so withdrawn is filtered and dried in the above described manner, and the amount of residual solid, mainly consisting of insoluble impurities, is about 75 mg, slightly greater than the amount detected with the clarified liquid resulting from four successive refiltrations, but still acceptable.

It will be appreciated that, with a single secondary filtration and the same total amount of washing liquid, the overall duration of the filtration process will be considerably reduced.

### b) Use of the apparatus as described by the inventors

6,000 liters slurry are treated using an apparatus that comprises a first filter with a filtering surface of 4 m² and a porosity of 20 µm, a useful depth of 150 cm and a useful volume capacity of about 6 m³.

At least three ports are arranged in the side wall of the first filter along its height, and communicate, via as many on-off valves, with a second filter, whose selective capacity is higher than that of the first filter.

A filtration process and a simultaneous slurry clarification process occur in the first filter.

Clarified liquid is withdrawn through the withdrawal ports on the side wall of the first filter, and is sent to the second filter.

The filter cake obtained as a result of primary filtration undergoes a single secondary filtration, using 4,000 liters washing liquid or four secondary filtrations using 1,000 liters washing liquid each time.

The primary filtration and the next secondary filtration (or filtrations) take about 8 - 9 hours overall, including the times required for initial supply of the slurry to the industrial filter-drier and for supply of the washing liquid, as well as for resuspension of the solid and the appropriate checks.

The production quality is at least equal to that achieved by the prior art.

The overall duration of production filtration and later drying and discharge falls within 24 hours, as compared with the 48 hours required at present, thereby providing twice the throughput of the current line.

## Claims

1. A device (1) for separating the solid fraction from the liquid fraction of a slurry (3), comprising
a) a container (2), which defines a chamber (20) for containing said slurry, said chamber (20) having a top (203) and a bottom (201);
b) a filter plate (4) located on the bottom (201) of said chamber (20) to retain the solid fraction of said slurry (3);
c) a conduit (21) for inflow of said slurry (3) into said chamber (20);
d) a conduit (23) for outflow of the filtered liquid through said filter medium (4);
e) a gas inflow conduit (22) for increasing pressure in said chamber (20);
f) a conduit (27) for inflow of washing liquids into said container (20);
g) a shaft (6) installed in said container (20), which supports a plurality of blades (61, 61);
said shaft (6) being adapted to rotate about a substantially and/or generally vertical axis (X),
g1) said shaft (6) being adapted to rotate in both directions about said axis of rotation (X),
g2) the distance of said blades (61, 61) from said filter plate (4) being adjustable,
g3) said blades (61, 61) being so conformed as to be able to scrape the solid fraction deposited on said filter plate (4), when said shaft (6) rotates in one direction of rotation, said blades (61, 61) being adapted to press the solid fraction deposited on said filter plate (4) when said shaft (6) rotates in a second direction of rotation, opposite to said first direction of rotation;
h) means (207, 208) for removing the solid fraction retained by said filter medium (4);
**characterized in that**
i) means (24, 240, 25, 250, 26, 260, 29, 290) are provided for withdrawing clarified liquid resulting from gravity sedimentation of the slurry from said container (20) at an adjustable level.

2. A device as claimed in claim 1, further comprising a flow meter (8) for detecting the flow rate of the gas introduced into said chamber (20) through said conduit (22) and means for stopping the withdrawal of said clarified liquid from a given level when said flow meter (8) detects a sudden increase of the gas flow rate.

3. A device as claimed in claim 1 or 2, further comprising a gas exhaust conduit (28) for reducing pressure in said chamber (20) and a heat exchanger (91) for heating the interior of said chamber (20).

4. A device as claimed in claim 1 or 2 or 3, further comprising a second filtering device (5), which is adapted to operate without stopping the filtration and clarification process that is being carried out in said container (2), said second filtering device (5) being connected to said means (24, 240, 25, 250, 26, 260) for withdrawing clarified liquid from said container (20), said second filtering device (5) having a higher selectivity than said first filter (2).

5. A device (1) as claimed in claim 4, wherein said second filtering device (5) is installed at a higher level than the level at which withdrawal from said container (2) occurs.

6. A device as claimed in any of the preceding claims, wherein the means (24, 240, 25, 250 26, 260) for withdrawing clarified liquid from said container (20) at an adjustable level comprise a plurality n of outflow ports (24, 25, 26), formed at different heights in said side wall (202) of said container (20), each outflow port (24, 25, 26) being designed to be selectively connected with said auxiliary filtering device (5).

7. A method of separating the solid fraction and the liquid fraction of a slurry (3), comprising the steps of
a) conveying a slurry (3) into a container (2);
b) introducing gas into said container (2) to increase the inner pressure thereof;
c) filtering said slurry (3), by causing the liquid part to pass through a filter medium (4) located on the bottom of the container while the solid fraction progressively builds up on the filter medium (4) and, at the same time as said slurry is filtered, executing at least once the cycle composed of the steps of:
c1) allowing partial clarification of said slurry (3) in said container (2) to obtain a clarified fraction (31, 33, 35) and a thickened slurry fraction (32, 34, 36) resulting from gravity separation of the slurry ;
c2) withdrawing at least a portion of the clarified fraction (31, 33, 35) in said container (2), the withdrawal occurring at varying levels over time while preventing the thickened slurry from being withdrawn from the clarified liquid:
d) removing the solid fraction that has built up on the filter medium (4).

8. A method as claimed in claim 7, comprising the additional step of:
c3) filtering the clarified fraction withdrawn from said container (20), the filtration of said clarified fraction occurring at a higher degree of filtration than the filtration of said slurry (3).

9. A method as claimed in claim 7 or 8, wherein withdrawal of said at least part of the clarified fraction to be filtered occurs utilizing the pressure in said container (2).

## Patentansprüche

1. Vorrichtung (1) zum Trennen der Feststoffraktion von der Flüssigfraktion einer Aufschlämmung (3), umfassend
a) einen Behälter (2), der eine Kammer (20) zum Aufnehmen der Aufschlämmung definiert, wobei die Kammer (20) ein Oberteil (203) und ein Bodenteil (201) aufweist;
b) eine Filterplatte (4), die auf dem Bodenteil (201) der Kammer (20) angeordnet ist, um die Feststofffraktion der Aufschlämmung (3) zurückzuhalten;
c) eine Leitung (21) zum Einströmen der Aufschlämmung (3) in die Kammer (20);
d) eine Leitung (23) zum Ausströmen der gefilterten Flüssigkeit durch das Filtermittel (4);
e) eine Gaseinlassleitung (22) zur Druckerhöhung in dieser Kammer (20);
f) eine Leitung (27) zum Einströmen von Waschflüssigkeiten in den Behälter (20);
g) eine in dem Behälter (20) installierte Welle (6), die mehrere Schaufeln (61, 61) trägt;
wobei die Welle (6) um eine im Wesentlichen und/oder allgemein vertikale Achse (X) drehbar ist,
g1) wobei die Welle (6) in beiden Richtungen um die Drehachse (X) drehbar ist,
g2) wobei der Abstand der Schaufeln (61, 61) von der Filterplatte (4) einstellbar ist,
g3) wobei die Schaufeln (61, 61) so ausgebildet sind, dass sie die auf der Filterplatte (4) abgeschiedene Feststofffraktion abschaben können, wenn sich die Welle (6) in einer Drehrichtung dreht, wobei die Schaufeln (61, 61) eingerichtet sind, um die auf der Filterplatte (4) abgeschiedene Feststofffraktion zu pressen, wenn die Welle (6) in einer der ersten Drehrichtung entgegengesetzten zweiten Drehrichtung dreht;
h) Mittel (207, 208) zum Entfernen der vom Filtermittel (4) zurückgehaltenen Feststofffraktion;
**dadurch gekennzeichnet, dass**
Mittel (24, 240, 25, 250, 26, 260, 29, 290) vorgesehen sind um geklärte Flüssigkeit, die sich aus der Schwerkraftsedimentation der Aufschlämmung ergibt, aus dem Behälter (20) auf einer einstellbaren Höhe zu entnehmen.

2. Vorrichtung nach Anspruch 1, ferner umfassend einen Durchflussmesser (8) zur Erfassung der Durchflussmenge des in die Kammer (20) eingeleiteten Gases durch die Leitung (22) und Mittel zum Unterbrechen der Entnahme der geklärten Flüssigkeit aus einem bestimmten Niveau, wenn das Durchflussmessgerät (8) eine sprunghafte Erhöhung des Gasdurchflusses detektiert.

3. Vorrichtung nach Anspruch 1 oder 2, ferner umfassend eine Gasauslassleitung (28) zur Reduzierung des Drucks in der Kammer (20) und einen Wärmetauscher (91) zum Beheizen des Innenraums der Kammer (20) aufweist.

4. Vorrichtung nach Anspruch 1 oder 2 oder 3, ferner umfassend eine zweite Filtereinrichtung (5), die dazu eingerichtet ist, ohne Anhalten des in diesem Behälter (2) ausgeführten Filtrations- und Klärprozesses zu arbeiten, wobei die zweite Filtereinrichtung (5) zur Entnahme von geklärter Flüssigkeit aus dem Behälter (20) mit den Mitteln (24, 240, 25, 250, 26, 260) verbunden ist, wobei die zweite Filtereinrichtung (5) eine höhere Selektivität als der erste Filter (2) aufweist.

5. Vorrichtung (1) nach Anspruch 4, wobei die zweite Filtereinrichtung (5) auf einem höheren Niveau als das Niveau installiert ist, bei dem die Entnahme aus dem Behälter (2) stattfindet.

6. Vorrichtung nach einem der vorstehenden Ansprüche, wobei die Mittel (24, 240, 25, 250, 26, 260) zur Entnahme von geklärter Flüssigkeit aus dem Behälter (20) in einer einstellbaren Höhe eine Mehrzahl von n-Ausströmöffnungen (24, 25, 26) aufweisen, die in unterschiedlichen Höhen in der Seitenwand (202) des Behälters (20) ausgebildet sind, wobei jede Ausströmöffnung (24, 25, 26) zur wahlweisen Verbindung mit der Hilfsfiltereinrichtung (5) ausgebildet ist.

7. Verfahren zum Trennen der Feststofffraktion von der Flüssigfraktion einer Aufschlämmung (3), umfassend die Schritte:
a) Fördern einer Aufschlämmung (3) in einen Behälter (2);
b) Einleiten von Gas in den besagten Behälter (2), um dessen Innendruck zu erhöhen;
c) Filtern der Aufschlämmung, indem die Flüssigfraktion durch ein Filtermittel (4) strömt, der sich auf dem Boden des Behälters befindet, während sich die Feststofffraktion fortschreitend auf dem Filtermittel (4) aufbaut und gleichzeitig mit dem Filtern der Aufschlämmung mindestens einmal der Zyklus ausgeführt wird, der sich aus den folgenden Schritten zusammensetzt:
c1) Ermöglichen einer teilweisen Klärung der Aufschlämmung (3) in dem Behälter (2), um eine geklärte Fraktion (31, 33, 35) und eine verdickte aus der Schwerkrafttrennung der Aufschlämmung ergebende Aufschlämmungsfraktion (32, 34, 36) zu erhalten,
c2) Entnahme des zumindest einen Teil der in dem Behälter (2) geklärten Fraktion (31, 33, 35), wobei die Entnahme über die Zeit in unterschiedlichen Höhen stattfindet, während eine Entnahme der verdickten Aufschlämmung aus der geklärten Flüssigkeit verhindert wird;
d) Entfernen der auf dem Filtermittel (4) aufgebauten Feststofffraktion.

8. Verfahren nach Anspruch 7, umfassend dem zusätzlichem Schritt:
c3) Filtern der aus dem Behälter (20) entnommenen geklärten Fraktion, wobei die Filtration dieser geklärten Fraktion mit einem höheren Filtrationsgrad als die Filtration der Aufschlämmung (3) erfolgt.

9. Verfahren nach Anspruch 7 oder 8, wobei die Entnahme des zumindest einen Teils der zu filternden geklärten Fraktion unter Ausnutzung des Drucks in diesem Behälter (2) erfolgt.

## Revendications

1. Dispositif (1) destiné à séparer la fraction solide de la fraction liquide d'une boue, comprenant
a) un récipient (2) définissant une chambre (20) pour contenir ladite boue, ladite chambre (20) comportant un sommet (203) et un fond (201) ;
b) un élément de filtration (4) située sur le fond (201) de ladite chambre (20) pour retenir la fraction solide de ladite boue (3) ;
c) un conduit (21) d'admission de ladite boue (3) dans ladite chambre (20) ;
d) un conduit (23) d'écoulement du liquide filtré à travers ledit élément de filtration (4) ;
e) un conduit d'admission de gaz (22) pour augmenter la pression dans ladite chambre (20) ;
f) un conduit (27) d'admission de liquides de lavage dans ledit récipient (20) ;
g) un arbre (6) installé dans ledit récipient (20), qui supporte une pluralité d'aubes (61, 61) ;
ledit l'arbre (6) étant apte à tourner autour d'un axe sensiblement et/ou généralement vertical (X), g1) ledit l'arbre (6) étant apte à tourner dans les deux sens autour dudit axe de rotation (X),
g2) la distance des dites aubes (61, 61) dudit élément de filtration (4) étant réglable,
g3) lesdites aubes (61, 61) étant conformées de façon à pouvoir racler la fraction solide déposée sur ledit élément de filtration (4), lorsque ledit arbre (6) tourne dans un sens de rotation, lesdites aubes (61, 61) étant aptes à presser la fraction solide déposée sur ledit élément de filtration (4) lorsque ledit arbre (6) tourne dans un second sens de rotation, opposé au premier sens de rotation ;
h) des moyens (207, 208) pour enlever la fraction solide retenue par ledit élément de filtration (4) ; **caractérisé en ce qu'**il comporte des moyens (24, 240, 25, 250, 26, 260, 29, 290) de retrait de liquide clarifié dudit récipient (20) à un niveau réglable.

2. Dispositif selon la revendication 1, comprenant également un débitmètre (8) permettant de détecter le débit du gaz introduit dans ladite chambre (20) à travers ledit conduit (22) et des moyens pour arrêter le retrait dudit liquide clarifié à partir d'un niveau donné lorsque ledit débitmètre (8) détecte une augmentation brusque du débit du gaz.

3. Dispositif selon la revendication 1 ou 2, comprenant également un conduit d'aspiration de gaz (28) destiné à réduire la pression dans ladite chambre (20) et un échangeur de chaleur (91) destiné à chauffer l'intérieur de ladite chambre (20).

4. Dispositif selon la revendication 1 ou 2 ou 3, comprenant également un deuxième dispositif de filtration (5), qui est conçu pour fonctionner sans arrêter la filtration et la clarification effectuées dans ledit récipient (2), ledit deuxième dispositif de filtration (5) étant relié auxdits moyens (24, 240, 25, 250, 26, 260) de retrait du liquide clarifié dudit récipient (20), ledit deuxième dispositif de filtration (5) ayant une sélectivité plus élevée que ledit premier filtre (2).

5. Dispositif (1) selon la revendication 4, dans lequel ledit deuxième dispositif de filtration (5) est installé à un niveau plus élevé que le niveau auquel a lieu le retrait dudit récipient (2).

6. Dispositif selon n'importe laquelle des revendications précédentes, dans lequel les moyens (24, 240, 25, 250, 26, 216) de retrait de liquide clarifié dudit récipient (20) à un niveau réglable comprennent une pluralité n d'orifices d'écoulement (24, 25, 26) formés à des hauteurs différentes dans ladite paroi latérale (202) dudit récipient (20), chaque orifice d'écoulement (24, 25, 26) étant destiné à être relié sélectivement avec ledit dispositif de filtration auxiliaire.

7. Procédé de séparation de la fraction solide et de la fraction liquide d'une boue (3), comprenant les étapes consistant à :
a) amener une boue (3) dans un récipient (2) ;
b) introduire du gaz dans ledit récipient (2) pour augmenter la pression interne de celui-ci ;
c) filtrer ladite boue (3) par le passage de la partie liquide à travers un élément de filtration (4) situé sur le fond du récipient
et, pendant
la filtration de la boue, exécuter au moins une fois le cycle composé des étapes consistant à : cl) effectuer la clarification partielle de ladite boue clarification partielle (3) dans ledit récipient (2) pour obtenir une fraction clarifiée (31, 33, 35) et une fraction de boue épaissie (32, 34, 36) résultant de la séparation par gravité de la boue ;
c2) retirer au moins une partie de la fraction clarifiée (31, 33, 35) contenue dans ledit récipient (2), le retrait étant effectué à des niveaux différents dans le temps tout en empêchant le retrait de la boue épaissie du liquide clarifié ;
d) enlever la fraction solide accumulée sur l'élément de filtration (4).

8. Procédé selon la revendication 7, comprenant l'étape additionnelle consistant à :
c3) filtrer la fraction clarifiée retirée dudit récipient (20), la filtration de ladite fraction clarifiée étant effectuée à un dégrée de filtration plus élevé que la filtration de ladite boue (3).

9. Procédé selon la revendication 7 ou 8, dans lequel le retrait de ladite au moins une partie de la fraction clarifiée à filtrer est effectué en utilisant la pression dans ledit récipient (2).
